# DEMANDE DE BREVET EUROPEEN

(11) **EP 2 337 205 A1**
(43) Date de publication de la demande: **22.06.2011**
(21) Numéro de dépôt: 10192767.1
(22) Date de dépôt: 26.11.2010
(51) Int. Cl.: H02M 3/158, G09G 3/32

(54) **Alimentation à découpage multiniveaux**

(30) Priorité: 16.12.2009 FR 0959067
(71) Demandeur: STMicroelectronics (Tours) SAS, 37100 Tours (FR)
(72) Inventeur: Peron, Benoît, 37000, TOURS (FR); Jouve, David, 37100, TOURS (FR)
(74) Mandataire: de Beaumont, Michel

(57) **Abrégé**

L'invention concerne un circuit de fourniture d'au moins deux tensions d'alimentation (V1, V2) à partir d'une tension continue (VR) fournie par un premier convertisseur à découpage (2) entre une première (30) et une deuxième borne (36), dans lequel : un deuxième convertisseur à découpage (5) réversible de type abaisseur est alimenté par ladite tension continue ; un pont diviseur capacitif (C54, C57) relie lesdites première et deuxième bornes, le point milieu du pont diviseur capacitif correspondant à la sortie du deuxième convertisseur et définissant une troisième borne (32) de fourniture d'un potentiel intermédiaire (HAVDD) ; et lesdites deux tensions d'alimentation sont prélevées respectivement entre les première et troisième et entre les troisième et deuxième bornes.

## Description

### Domaine de l'invention

La présente invention concerne de façon générale des circuits électroniques et, plus particulièrement, les circuits d'alimentation de type alimentation à découpage.

L'invention s'applique plus particulièrement aux alimentations à découpage destinées à des écrans de visualisation, en particulier des écrans à cristaux liquides (LCD) ou à diodes électroluminescentes organiques à matrice active (AMOLED - active-matrix organic light-emitting diode).

### Exposé de l'art antérieur

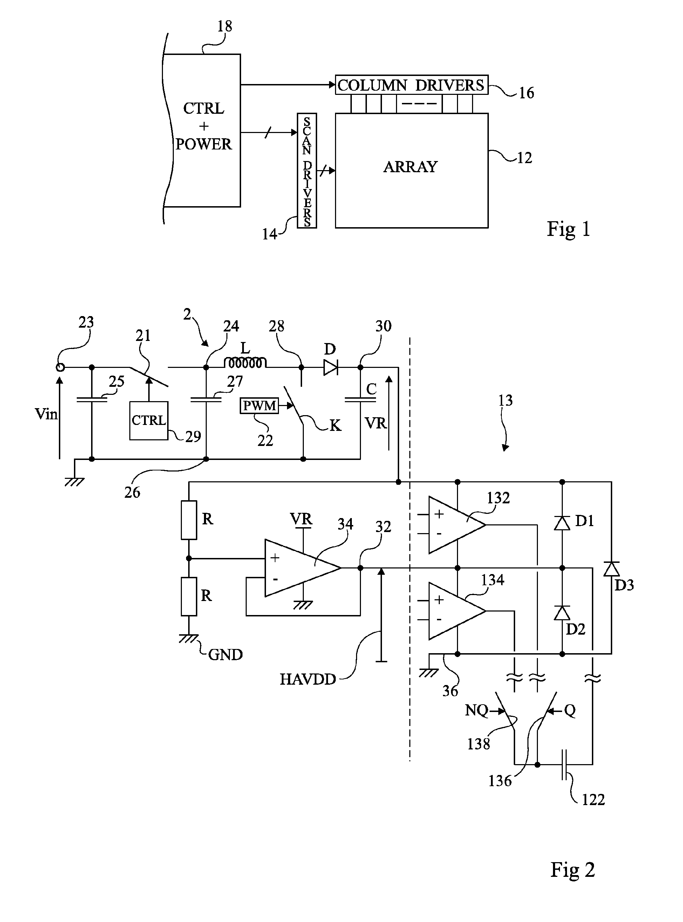

La figure 1 est un schéma bloc simplifié d'un écran de visualisation, par exemple un écran à cristaux liquides du type auquel s'applique plus particulièrement la présente invention.

L'écran comporte un réseau matriciel 12 (ARRAY) de cellules à cristaux liquides commandé par des circuits 14 de commande de ligne (SCAN DRIVERS) et par des circuits 16 de commande de colonne (COLUMN DRIVERS). Les circuits 14 et 16 sont alimentés et commandés par un circuit 18 (CTRL + POWER) incluant un ou plusieurs circuits d'alimentation à découpage.

Les cellules de l'écran requièrent une tension d'alimentation relativement élevée (supérieure à 10 volts, généralement de l'ordre de 15 volts) par rapport à la tension supportable par des composants dits basse tension (moins de 10 volts). La tension d'alimentation des cellules est généralement fournie par les circuits de colonne 16. Le nombre de ces circuits est important (en pratique, un par colonne ou un pour deux colonnes) et, pour des besoins d'intégration et de miniaturisation, on cherche à réaliser ces circuits dans une technologie plus fine que celle requise pour supporter la tension relativement élevée. Pour cela, on réalise des circuits de commande de colonne utilisant une tension intermédiaire, de sorte que les composants de ces circuits n'aient à supporter qu'environ la moitié de la tension autrement requise.

Les circuits de commande de colonne sont alors réalisés sous la forme de convertisseurs numérique-analogique cycliques équipés chacun d'un réseau de commutateurs permettant de sélectionner la tension d'alimentation parmi la tension entre le potentiel relativement élevé et un potentiel intermédiaire et la tension entre le potentiel intermédiaire et le potentiel de référence.

Se pose alors le problème de fournir ces trois potentiels.

La figure 2 est une représentation partielle d'un circuit de génération d'une tension intermédiaire, notée HAVDD entre une tension VR relativement élevée et la masse GND. La tension VR est fournie par un circuit de type alimentation à découpage, alimenté par une tension V_{IN}. Dans les applications aux écrans à cristaux liquides et aux écrans de type AMOLED que visent plus particulièrement la présente invention, la tension V_{IN} est de l'ordre de 12 Volts et la tension VR est de l'ordre de 15 à 18 Volts. Le convertisseur de puissance 2 est de type élévateur de tension (boost). Il comporte un interrupteur K commandé par modulation de largeur d'impulsions (bloc 22, PWM) pour commuter l'accumulation de courant dans un élément inductif L. Pour un convertisseur élévateur, l'élément inductif et l'interrupteur K sont en série entre deux bornes 24 et 26 d'application d'une tension continue. Une diode de roue libre D, en série avec un condensateur de sortie C, relie le point milieu 28 de l'association en série de l'inductance L et de l'interrupteur K, à la masse 26. La tension de sortie VR est prélevée aux bornes de l'élément capacitif C. Côté tension d'alimentation, la tension V_{IN} est, en pratique, appliquée par l'intermédiaire d'un interrupteur 21. Cet interrupteur relie une borne 23 d'application de la tension V_{IN} à la borne 24. Généralement, deux éléments capacitifs 25 et 27 de lissage relient respectivement les bornes 23 et 24 à la masse 26. L'interrupteur 21 est commandé, par exemple, par un circuit 29 (CTRL). Ce circuit peut correspondre à un circuit de sortie du mode veille de l'écran ou à tout autre interrupteur d'allumage.

Pour générer la tension intermédiaire HAVDD à partir de la tension VR, on utilise habituellement un montage suiveur associé à un pont diviseur résistif formé de deux résistances en série entre la borne 30 de fourniture de la tension VR et la masse GND. Le point milieu de l'association en série est relié à une entrée non inverseuse d'un amplificateur opérationnel 34 monté en suiveur (dont la borne de sortie est rebouclée sur l'entrée inverseuse). En général, la tension intermédiaire correspond à la moitié de la tension d'alimentation VR. Par conséquent, on utilise des résistances R de même valeur.

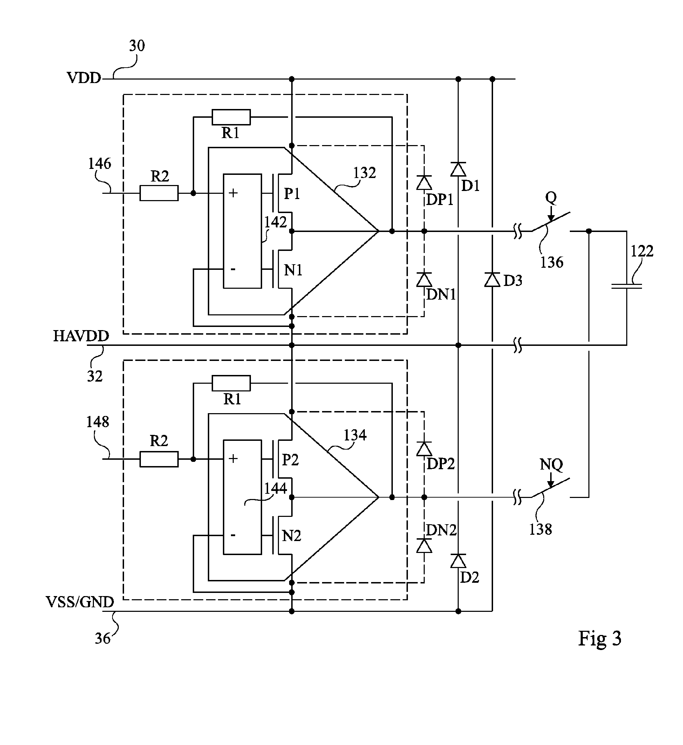

Côté écran, chaque étage 13 de commande d'une colonne comporte deux amplificateurs 132 et 134 dont les sorties respectives sont destinées à être connectées par l'intermédiaire d'interrupteurs, respectivement 136 et 138, à une première électrode d'une cellule 122 de l'écran, l'autre électrode de cette cellule étant directement connectée à la borne 32 de fourniture du potentiel intermédiaire HAVDD. Les interrupteurs 136 et 138 sont commandés en alternance en fonction du besoin de porter la première électrode de la cellule à un potentiel supérieur au potentiel intermédiaire ou à un potentiel inférieur. Pour simplifier, une seule cellule 122 a été représentée mais on notera qu'un même amplificateur de colonne 13 alimente toutes les cellules d'une même colonne qui sont sélectionnées par les circuits de commande de ligne (14, figure 1). Les amplificateurs 132 et 134 reçoivent des signaux de commande correspondant aux consignes d'éclairement comme cela sera mieux compris par la suite en relation avec l'exposé de la figure 3, ce fonctionnement étant lui-même connu.

Des éléments de protection contre des décharges électrostatiques sont prévus pour le circuit d'alimentation. Typiquement, deux diodes D1 et D2 relient respectivement les bornes 30 et 32 et les bornes 32 et 36, leurs anodes respectives étant côté borne 32 et côté borne 36, tandis qu'une troisième diode D3 relie les bornes 30 et 36, son anode étant côté borne 36. Bien qu'ils aient été représentés côté écran, ces éléments sont généralement connectés côté circuits de commande de colonne (16, figure 1).

Un inconvénient du circuit d'alimentation de la figure 2 est la dissipation engendrée par les résistances R du diviseur de tension et de l'amplificateur 34.

Le document JP-A-2004-350471 décrit un circuit diviseur de tension basé sur un convertisseur à découpage et un pont diviseur capacitif.

Le document US-A-2009/026977 décrit un circuit de commande et d'alimentation d'un écran à cristaux liquides.

### Résumé

Un objet d'un mode de réalisation de la présente invention est de proposer un circuit d'alimentation multi-niveaux qui pallie tout ou partie des inconvénients des circuits d'alimentation usuels.

Un objet d'un autre mode de réalisation de la présente invention est de proposer un circuit d'alimentation engendrant une dissipation réduite par rapport au circuit à suiveur.

Un objet d'un autre mode de réalisation de la présente invention est de proposer une solution compatible avec l'utilisation d'éléments de protection contre des décharges électrostatiques.

Ainsi, un mode de réalisation de la présente invention prévoit un circuit de fourniture d'au moins deux tensions d'alimentation à partir d'une tension continue fournie par un premier convertisseur à découpage entre une première et une deuxième borne, dans lequel :
un deuxième convertisseur à découpage réversible de type abaisseur est alimenté par ladite tension continue ;
un pont diviseur capacitif relie lesdites première et deuxième bornes, le point milieu du pont diviseur capacitif correspondant à la sortie du deuxième convertisseur et définissant une troisième borne de fourniture d'un potentiel intermédiaire ; et
lesdites deux tensions d'alimentation sont prélevées respectivement entre les première et troisième et entre les troisième et deuxième bornes.

Selon un mode de réalisation de la présente invention, une diode relie les première et troisième bornes.

Selon un mode de réalisation de la présente invention, le circuit comporte en outre un élément d'extinction du deuxième convertisseur à découpage quand la tension continue est inférieure à un seuil choisi pour maintenir le potentiel intermédiaire tant que la tension continue n'a pas atteint ce potentiel intermédiaire.

Selon un mode de réalisation de la présente invention, des diodes de protection contre des décharges électrostatiques sont connectées respectivement entre les première et troisième, entre les troisième et deuxième et entre les première et deuxième bornes.

Selon un mode de réalisation de la présente invention, lesdites deux tensions d'alimentation sont destinées à alimenter des amplificateurs de colonne d'un écran à cristaux liquides ou de type AMOLED.

On prévoit également un écran à cristaux liquides comportant un tel circuit d'alimentation.

On prévoit également un écran AMOLED comportant un tel circuit d'alimentation.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, est un schéma bloc simplifié d'un écran du type auquel s'applique à titre d'exemple la présente invention ;
la figure 2, décrite précédemment, est un schéma électrique simplifié d'un exemple usuel de circuit d'alimentation à découpage de fourniture de tensions multiples, associé à un circuit de commande de colonne et son dispositif de protection contre des décharges électrostatiques ;
la figure 3 représente partiellement la structure interne des amplificateurs d'un circuit de commande de colonne associée à un circuit de protection contre des décharges électrostatiques ;
la figure 4 représente un circuit d'alimentation à découpage selon un mode de réalisation de la présente invention, associé à un circuit de commande de colonne et à un dispositif de protection contre des décharges électrostatiques ; et
les figures 5A, 5B, 5C et 5D sont des chronogrammes illustrant le fonctionnement du circuit de la figure 4.

### Description détaillée

De mêmes éléments ont été désignés par de mêmes références aux différentes figures et, de plus, les chronogrammes ne sont pas tracés à l'échelle. Par souci de clarté, seuls les éléments utiles à la compréhension de l'invention ont été représentés et seront décrits. En particulier, la constitution de la matrice de pixels de l'écran n'a pas été détaillée, l'invention étant compatible avec tout écran usuel. De plus, la génération de divers signaux de commande n'a pas non plus été détaillée, l'invention étant là encore compatible avec les circuits usuels de génération de tels signaux.

La figure 3 représente, de façon schématique, les structures internes de deux amplificateurs 132 et 134 des convertisseurs numérique-analogique des circuits de commande de colonne et notamment de leurs étages de sortie respectifs. Comme en figure 2, les sorties des amplificateurs 132 et 134 ont été symbolisées reliant une cellule 122 de l'écran par l'intermédiaire d'interrupteurs 136 et 138 respectivement commandés par un signal Q et son inverse NQ. L'étage de sortie de chaque amplificateur comporte deux transistors MOS de types opposés, respectivement P1, N1 et P2, N2 en série entre respectivement la borne 30 au potentiel VR et la borne 32 au potentiel HAVDD et entre la borne 32 et la borne 36 de référence (typiquement, la masse). Ces transistors sont commandés par un étage différentiel respectivement 142, 144. Les entrées directes (+) respectives des amplificateurs 132 et 134 sont reliées par des éléments résistifs, respectivement R1 et R2, à la borne de sortie de l'amplificateur concerné et à une borne d'entrée respectivement 146, 148 du montage amplificateur, provenant des convertisseurs numérique-analogique.

Une difficulté liée au montage des amplificateurs 132 et 134 est que les transistors P1, N1, P2 et N2 doivent être protégés contre d'éventuelles décharges électrostatiques. Les diodes substrat DP1, DN1, DP2 et DN2 (illustrées en pointillé) sont susceptibles de jouer ce rôle. Toutefois, le courant qu'elles sont susceptibles de supporter n'est pas suffisant. C'est pourquoi on prévoit les diodes D1, D2 et D3 décrites précédemment en relation avec la figure 2.

Le système de génération de la tension intermédiaire HAVDD doit respecter la protection ESD des amplificateurs. Dans le circuit de la figure 2, un problème peut se poser au démarrage et à l'extinction de l'écran où toutes les diodes D1, D2 et D3 risquent de ne pas être polarisées en inverse, ce qui peut endommager l'écran.

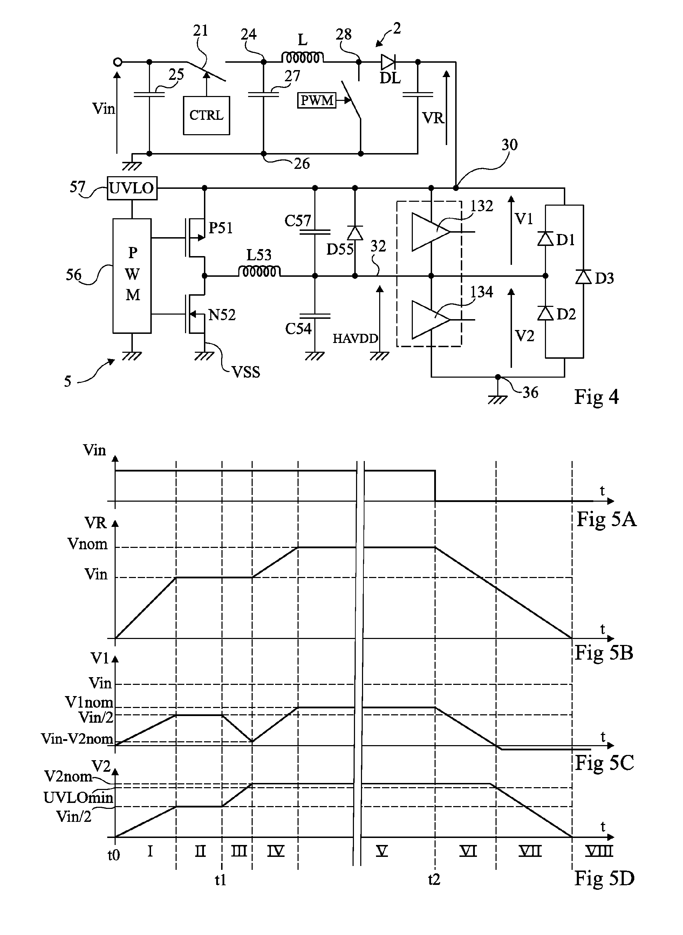

La figure 4 est un schéma électrique partiel à rapprocher de celui de la figure 2. Ce schéma illustre un mode de réalisation d'un circuit 5 de fourniture d'une tension intermédiaire HAVDD entre un potentiel haut VR fourni par un circuit 2 d'alimentation à découpage et un potentiel bas (VSS ou GND).

On utilise, à la place de l'amplificateur suiveur de la figure 2, un convertisseur à découpage de type abaisseur (buck). Ce convertisseur est un convertisseur dit réversible pour être capable de restituer un niveau positif et négatif par rapport au niveau HAVDD intermédiaire. Il comporte deux transistors P51 et N52, respectivement à canal P et à canal N, en série entre les bornes 30 et 36. Le point milieu de cette association en série est relié, par une inductance L53, au noeud 32 de fourniture de la tension HAVDD, relié par un élément capacitif C54 à la masse. Une diode de roue libre D55 relie les bornes 32 et 30, son anode étant connectée côté borne 32. Les grilles respectives des transistors P51 et P52 sont commandées par un circuit 56 (PWM) en modulation de largeur d'impulsion.

En outre, un autre élément capacitif C57 relie les bornes 30 et 32 pour former un pont diviseur capacitif comme cela sera mieux compris par la suite.

De préférence, le circuit de commande 56 est alimenté à partir de la tension VR par un bloc 57 (UVLO OFF - Under Voltage Lock Out) chargé de réduire la plage de fonctionnement du convertisseur abaisseur. Ce circuit sert lors de l'extinction de l'écran à garantir que la tension HAVDD n'excède pas la moitié de la tension VR.

Les figures 5A, 5B, 5C et 5D sont des chronogrammes illustrant le fonctionnement du circuit de la figure 4. La figure 5A est un exemple d'allure de la tension V_{IN} en entrée du convertisseur à découpage 2, c'est-à-dire aux bornes du condensateur 27 en aval de l'interrupteur de commande 21. La figure 5B illustre un exemple correspondant d'évolution de la tension VR. Les figures 5C et 5D illustrent l'évolution des tensions V1 et V2 fournies aux bornes des diodes D1 et D2, donc aux bornes d'alimentation des amplificateurs respectivement 132 et 134.

On suppose un allumage de l'alimentation à découpage à un instant t0, par exemple par la fermeture de l'interrupteur 21, de sorte que la tension V_{IN} est établie aux bornes du condensateur 27, c'est-à-dire à l'entrée du circuit d'alimentation à découpage 2. Le circuit 2 n'a pas commencé à fonctionner. Une première phase I voit alors l'augmentation de la tension VR sous l'effet de l'alimentation à découpage. Les tensions V1 et V2 croissent en parallèle sous l'effet du pont diviseur capacitif C57, C54, le circuit 56 n'a pas encore commencé à fonctionner.

Une deuxième phase II commence quand la tension VR fournie par le convertisseur élévateur 2 atteint le niveau V_{IN}. Les niveaux des tensions V1 et V2 sont alors de la moitié V_{IN}/2 de la valeur de la tension V_{IN}. La phase II doit être la plus courte possible afin d'éviter un déséquilibre de la tension HAVDD par rapport au niveau VR et à la masse, pour le cas où le courant tiré sur le noeud 32 ou fourni à ce noeud 32 est supérieur à CdV/2dt, où C représente la valeur du condensateur C54 ou C57, dV représente la variation de tension imposée par l'appel de courant et dt représente la durée de la phase II.

A partir d'un instant t1 commence une troisième phase III dans laquelle le circuit d'alimentation à découpage abaisseur 5 est démarré. Le convertisseur 2 est toujours éteint.

On notera qu'en l'absence de condensateur C57, la tension V1 prendrait la même valeur que la tension VR et on assisterait à aucune charge du condensateur C54, le convertisseur 56 n'ayant pas démarré.

Pendant la phase III, la tension V1 décroît tandis que la tension V2 croît. En fin de phase III, la tension V2 atteint un niveau nominal V2nom qui sera conservé pendant le fonctionnement de l'écran. La tension V1 atteint un niveau Vin-V2nom.

Une quatrième phase IV consiste à provoquer, grâce au convertisseur à découpage 5, une augmentation de la tension V1 jusqu'à son niveau nominal. A l'issue de cette phase IV, l'écran peut fonctionner (phase V).

On suppose qu'à un instant t2, on provoque l'extinction de l'écran par disparition de la tension en entrée du convertisseur 2 (par exemple par ouverture de l'interrupteur 21). Les condensateurs 25 et 27 sont alors mis hors tension et on assiste (phase VI) à une décroissance des tensions VR et V1. Pendant cette phase VI, le niveau de la tension V2 est maintenu stable par le convertisseur qui est maintenu en fonctionnement par le circuit 57 pour assurer que la tension VR descende suffisamment avant que la diode D55 ne conduise. Quand la tension VR est suffisamment basse et que la tension V1 devient négative, la tension V2 atteint un niveau UVLOmin et le circuit 57 s'arrête. La tension V2 peut alors décroître (phase VII) dans les impédances équivalentes des amplificateurs 132 et 134 jusqu'à extinction complète (phase VIII).

La valeur UVLOmin est choisie pour être inférieure à HAVDD-VD55, où VD55 représente la chute de tension dans la diode D55 en conduction.

La diode D55 protège la diode D1 en cas d'extinction sous charge faible. En effet, dans un tel cas, le potentiel de la borne 30 est inférieur à celui de la borne 32. Le condensateur C57 se décharge alors plus vite que le condensateur C54. Il en découlerait l'injection d'un courant dans la diode D1 qui risquerait d'endommager les amplificateurs 134. Avec la diode D55, on impose une tension négative entre les bornes 30 et 32 qui est limitée à environ 0,6 volt (tension de jonction de la diode D55).

En pratique, le circuit 57 est par exemple constitué d'un comparateur de la tension au noeud 32 par rapport à une tension de référence choisie pour être inférieure à HAVDD diminuée de la tension VD55, la sortie du comparateur servant à commander l'arrêt du circuit 56.

Les convertisseurs 2 et 5 sont partagés pour plusieurs colonnes. Selon l'importance de l'énergie à fournir et les dimensionnements des composants, ce convertisseur alimente tout ou partie de l'écran.

Le circuit de la figure 4 peut être étendu à la fourniture de plus de deux tensions d'alimentation en prévoyant à chaque fois un pont diviseur capacitif de démarrage, une diode équivalente à la diode D55 de protection à l'extinction, et un niveau UVLOmin(i) inférieur à (i*VR/n)-VD55, n représentant le nombre de tensions et i étant compris entre 1 et n-1.

Divers modes de réalisation ont été décrits. Diverses variantes apparaîtront à l'homme de l'art. En particulier, le nombre d'amplificateurs de l'écran alimentés par un seul circuit dépend de l'application et de l'énergie requise. De même, les dimensions à donner aux différents composants du circuit de la figure 4, ainsi que la fourniture des signaux de commande adaptés aux convertisseurs à découpage, sont à la portée de l'homme du métier à partir des indications fonctionnelles données ci-dessus et de l'application visée.

## Revendications

1. Circuit de fourniture d'au moins deux tensions d'alimentation (V1, V2) à partir d'une tension continue (VR) fournie par un premier convertisseur à découpage (2) entre une première (30) et une deuxième borne (36), dans lequel :
un deuxième convertisseur à découpage (5) réversible de type abaisseur est alimenté par ladite tension continue ;
un pont diviseur capacitif (C54, C57) relie lesdites première et deuxième bornes, le point milieu du pont diviseur capacitif correspondant à la sortie du deuxième convertisseur et définissant une troisième borne (32) de fourniture d'un potentiel intermédiaire (HAVDD) ; et
lesdites deux tensions d'alimentation sont prélevées respectivement entre les première et troisième et entre les troisième et deuxième bornes,
**caractérisé en ce qu'**une diode (D55) relie les première et troisième bornes.

2. Circuit selon la revendication 1, comportant en outre un élément (57) d'extinction du deuxième convertisseur à découpage quand la tension continue est inférieure à un seuil choisi pour maintenir le potentiel intermédiaire (HAVDD) tant que la tension continue (VR) n'a pas atteint ce potentiel intermédiaire.

3. Circuit selon la revendication 1 ou 2, dans lequel des diodes (D1, D2, D3) de protection contre des décharges électrostatiques sont connectées respectivement entre les première (30) et troisième (32), entre les troisième et deuxième (36) et entre les première et deuxième bornes.

4. Circuit selon l'une quelconque des revendications 1 à 3, dans lequel lesdites deux tensions d'alimentation (V1, V2) sont destinées à alimenter des amplificateurs de colonne d'un écran à cristaux liquides ou de type AMOLED.

5. Ecran à cristaux liquides comportant un circuit d'alimentation conforme à l'une quelconque des revendications 1 à 4.

6. Ecran AMOLED comportant un circuit d'alimentation conforme à l'une quelconque des revendications 1 à 4.
